# DEMANDE DE BREVET EUROPEEN

(11) **EP 0 574 322 A1**
(43) Date de publication de la demande: **15.12.1993**
(21) Numéro de dépôt: 93401491.1
(22) Date de dépôt: 10.06.1993
(51) Int. Cl.: H02P 7/62

(54) **Procédé de commande d'un onduleur de tension polyphasé à modulation de largeur d'impulsions et dispositif pour la mise en oeuvre de ce procédé**

(30) Priorité: 12.06.1992 FR 9207070
(71) Demandeur: SCHNEIDER ELECTRIC SA, F-92100 Boulogne-Billancourt (FR)
(72) Inventeur: Cornilleau, Hubert, F-78480 Verneuil sur Seine (FR); Vilain, Jean-Paul, F-60150 Melicocq (FR)
(74) Mandataire: Carias, Alain

(57) **Abrégé**

La présente invention se rapporte à un procédé de commande d'un onduleur polyphasé relié à une source d'alimentation et piloté en modulation de largeur d'impulsions par un circuit de commande, comprenant plusieurs bras (B1-B3) dont chacun comporte deux interrupteurs statiques (H1,L1;H2,L2;H3,L3) munis de diodes de récupération (D1-D6), le point milieu entre deux interrupteurs étant relié à une charge inductive (4) , caractérisé par le fait qu'il consiste à réaliser un asservissement de l'amplitude du vecteur tension à une valeur de consigne et un asservissement de phase du dit vecteur tension à une valeur de consigne.

## Description

La présente invention concerne un procédé de commande d'un onduleur de tension polyphasé relié à une source d'alimentation et piloté en modulation de largeur d'impulsions (en abrégé MLI et en anglais PWM pour Pulse Width Modulation) et à un dispositif destiné à la mise en oeuvre de ce procédé et comprenant plusieurs bras dont chacun comporte deux interrupteurs statiques munis de diodes de récupération, le point milieu entre deux interrupteurs étant relié à une phase d'une charge polyphasée.

Les convertisseurs statiques de fréquence utilisés pour I'entraînement des moteurs à induction ou asynchrones comprennent d'une part une source d'alimentation continue et d'autre part un onduleur à interrupteurs statiques (convertisseur continu-alternatif) alimenté par la source d'alimentation décrite précédemment et raccordé aux enroulements de phase du moteur. Cet onduleur est piloté en modulation de largeur d'impulsions par un circuit de commande et délivre des tensions variables en fréquence. L'onduleur présente plusieurs bras dont chacun est équipé de deux interrupteurs statiques munis de diodes respectives de récupération. Le point milieu de chaque couple d'interrupteurs d'un même bras est relié à un enroulement de phase du moteur. Le circuit de commande permet de rendre passants et bloquants les interrupteurs aux instants choisis.

Par interrupteurs statiques, on entend des transistors bipolaires ou MOS, des composants MOS-bipolaires tels que ceux connus sous la désignation IGBT, des thyristors blocables du genre GTO ou d'autres composants blocables analogues.

Le brevet FR 2.613.554 décrit par exemple un onduleur polyphasé à modulation de largeur d'impulsions. Les tensions délivrées par les "bras de pont" s'appuient sur les niveaux de tension de la source d'alimentation continue. Ces tensions sont telles qu'elles contiennent des composantes fondamentales d'amplitudes identiques, déphasées de façon à constituer un réseau polyphasé équilibré avec lequel on pourra alimenter un moteur (par exemple un moteur asynchrone triphasé).

Les tensions contiennent aussi des harmoniques qui perturbent le fonctionnement du moteur. Les concepteurs de ces onduleurs essaient de mettre au point des stratégies de modulation de largeur d'impulsions telles que les harmoniques soient de rangs élevés afin que les perturbations engendrées soient négligeables. Ceci n'est pas très facile à réaliser si les composants mis en oeuvre dans l'onduleur ne commutent pas très rapidement et n'acceptent par de travailler à des fréquences excédant quelques kilohertz. Il est donc intéressant de rechercher une stratégie qui génère le moins d'harmoniques de rang faible même pour une fréquence moyenne de découpage modeste.

La lenteur des composants à la commutation et en particulier au blocage nécessite d'introduire un retard entre l'ordre d'ouverture d'un interrupteur et celui de fermeture de l'autre interrupteur d'un même bras de pont. Sinon, le composant qui doit se fermer risque de devenir conducteur avant que l'autre composant ne soit bloqué, ce qui produirait un court-circuit sur la source d'alimentation. Le temps mort que l'on introduit systématiquement s'appelle le retard intervoie. Dans ces conditions, l'instant de commutation réelle de la tension du bras de pont dépend du sens du courant qui sort. Cela est à l'origine de l'apparition d'harmoniques de rang 2 et même de sous-harmoniques entraînant des vibrations du moteur. Les perturbations qui sont à l'origine du défaut se produisent à chaque commutation. Il semble donc important de s'arranger pour n'avoir aucune commutation superflue et pour que chacune soit judicieuse.

Ce qui compte généralement pour la charge, ce n'est pas l'évolution des tensions simples elles-mêmes, mais celle du vecteur tension qui en résulte. Rappelons que le vecteur tension est une représentation mathématique qui traduit la résultante des tensions réelles appliquées sur la charge. Pour supprimer l'effet des perturbations, le vecteur tension devrait tourner à vitesse et amplitude constantes, comme dans le cas d'une alimentation par des sinusoïdes parfaites. Avec un onduleur à plusieurs bras de pont, ceci est absolument irréalisable. En effet, chacune des sorties ne peut se trouver que dans deux états. Donc le vecteur tension ne peut connaître que huit configurations. Parmi ces configurations, 6 sont des états actifs qui correspondent à une amplitude fixe et se distinguent par la phase et 2 sont des états dits de "roue libre" pour lesquels l'amplitude du vecteur est nulle et la phase n'est pas définie.

A tout instant, le vecteur tension souhaité (consigne de vecteur tension) est différent du vecteur tension instantané réel qui est la résultante des tensions présentes sur les sorties des ponts. Dans la plupart des procédés de modulation, il se produit par moment des déplacements erratiques du vecteur tension instantané réel.

La présente invention a pour but de fournir un procédé de modulation de largeur d'impulsions dans lequel l'asservissement est appliqué non aux tensions simples mais à l'amplitude et à la phase du vecteur tension pour diminuer les erreurs d'amplitude et de phase.

Le procédé selon l'invention est caractérisé par le fait qu'il consiste à réaliser un asservissement de l'amplitude du vecteur tension à une valeur de consigne et un asservissement de phase du dit vecteur tension à une valeur de consigne.

Selon une autre caractéristique, le procédé consiste à déterminer un signal d'erreur entre l'amplitude du vecteur tension et une valeur de consigne à intégrer ce signal d'erreur, à comparer la valeur intégrée à des seuils pour faire commuter les bras de pont, à déterminer un signal d'erreur entre la phase dudit vecteur tension et un valeur de consigne, à intégrer ce signal d'erreur, à comparer cette valeur intégrée à des seuils pour faire commuter les bras de pont.

Selon une autre caractéristique, le procédé consiste à mesurer l'amplitude réelle et la phase réelle du vecteur tension sur les bras de pont de manière à déterminer les signaux d'erreurs.

Selon une autre caractéristique, le procédé consiste à déterminer l'orientation du vecteur tension en fonction de la conduction ou non des interrupteurs ou de leurs diodes et à déterminer l'amplitude dudit vecteur tension par la mesure ou l'estimation de la tension d'alimentation de l'onduleur.

Le dispositif selon l'invention comporte des moyens pour déterminer un signal d'erreur entre l'amplitude réelle ou estimée du vecteur tension et une valeur de consigne, des moyens pour intégrer ce signal d'erreur, des moyens pour comparer la valeur intégrée à des seuils et des moyens pour commander la commutation des bras de pont, des moyens pour déterminer un signal d'erreur entre la phase dudit vecteur tension et un valeur de consigne, des moyens pour intégrer ce signal d'erreur, et des moyens pour comparer cette valeur intégrée à des seuils et pour commander la commutation des bras de pont.

Selon une caractéristique, le dispositif comporte des moyens pour fournir des signaux représentatifs de la phase réelle ou estimée et de l'amplitude réelle ou estimée du vecteur tension, à partir des ordres de commande des interrupteurs, ces signaux étant envoyés respectivement aux moyens pour déterminer le signal d'erreur en phase et aux moyens pour déterminer le signal d'erreur en amplitude.

L'invention va maintenant être décrite avec plus de détail en se référant à des modes de réalisation donnés à titre d'exemples et représentés par les dessins annexés sur lesquels:
- La figure 1 représente un schéma fonctionnel d'un premier mode de réalisation de l'onduleur selon l'invention;
- la figure 2 représente un schéma fonctionnel d'un second mode de réalisation de l'onduleur selon l'invention;
- la figure 3 est un diagramme expliquant le fonctionnement du comparateur d'amplitude;
- la figure 4 est un diagramme de fonctionnement du comparateur de phase intégré aux onduleurs des figures 1 et 2;
- la figure 5 est un schéma représentant la phase instantanée en fonction du temps;
- la figure 6 représente le diagramme de fonctionnement d'une variante du comparateur de phase intégré aux onduleurs des figures 1 et 2;
- la figure 7 représente le schéma d'une machine triphasée à une paire de pôles alimentée par l'onduleur selon l'invention;
- la figure 8 est un schéma des différents états possibles du vecteur tension avec un exemple de consigne du vecteur tension repérée CVT;
- la figure 9 est un organigramme illustrant le procédé selon l'invention.

L'onduleur selon l'invention, repéré 1, est relié par l'intermédiaire d'un filtre capacitif de lissage 2 à un redresseur à diodes 3 relié aux conducteurs de phase du réseau. L'onduleur 1 comporte trois bras de pont B1, B2, B3 reliés chacun à un enroulement de phase d'un moteur à induction ou asynchrone 4.

Chaque bras B1-B3 de l'onduleur est équipé de deux interrupteurs statiques H1, L1 pour B1, H2, L2 pour B2, H3, L3 pour B3 munis, de manière connue en soi, de diodes de récupération non représentées.

Les interrupteurs statiques H1, H2, H3, L1, L2, L3, sont constitués par des transistors bipolaires ou MOS, soit par des composants MOS-bipolaires tels que ceux connus sous la désignation IGBT, soit par des thyristors blocables du genre GTO soit par d'autres composants blocables analogues.

Le point milieu de chaque couple d'interrupteurs d'un même bras est relié à un enroulement de phase du moteur 4. Un circuit de commande 5 permet de rendre passants et bloquants les interrupteurs H1, H2, H3, L1, L2, L3 suivant une stratégie qui va être définie ci-dessous.

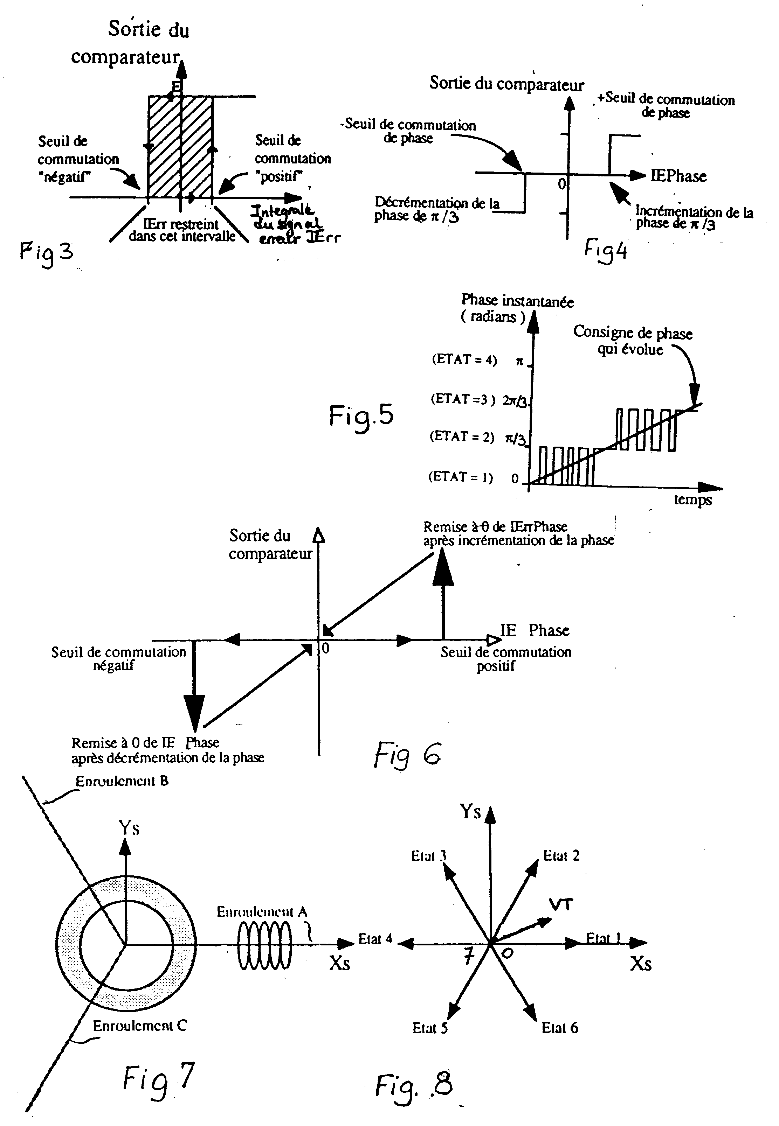

Le vecteur tension réel, désigné VT, peut être défini dans un repère orthogonal (Xs,Ys) lié au stator. En se référant aux figures 7 et 8, le vecteur tension peut prendre, suivant la façon dont on alimente les 3 enroulements A, B, C, un des 6 états différents d'amplitude non nulle repérés 1, 2, 3, 4, 5, 6 ou un des deux états d'amplitude nulle repérés O et 7. La grandeur "phase" du vecteur tension dont l'amplitude est non nulle définit sa position dans l'espace, dans le repère Xs/Ys. Parmi les 8 états que peut connaître le vecteur tension, 6 sont des états actifs et 2 sont des états de "roue libre". Les états actifs 1 à 6 correspondent à une amplitude fixe et se distinguent par la phase qui est un multiple de π/3.

L'amplitude des états 1 à 6 est déterminée par la source d'alimentation continue de l'onduleur. Le vecteur tension a une amplitude nulle et la phase n'est pas définie lorsque les trois interrupteurs du haut ou ceux du bas sont fermés simultanément. On utilisera le terme "roue libre" pour désigner les deux états particuliers correspondant à ces conditions.

A tout instant, le vecteur tension souhaité ou de consigne( repéré CVT à la figure 8) est différent du vecteur tension instantané réel. Il existe une erreur d'amplitude ainsi qu'une erreur de phase.

Le circuit de commande 5 reçoit, en 61, un signal correspondant à l'amplitude du vecteur tension de consigne et, en 62, un signal correspondant à la phase de ce vecteur tension de consigne.

Le signal de consigne d'amplitude reçu en 61 et un signal correspondant à l'amplitude déduite de la commande des interrupteurs ou à l'amplitude du vecteur tension réel sont appliqués à un élément 51 qui fournit un signal d'erreur correspondant à la différence de ces signaux. Le signal d'erreur fourni par 51 est appliqué à un élément intégrateur 52 qui assure une intégration du signal d'erreur notée IErr sur le dessin. Cette intégration du signal d'erreur est envoyée à un comparateur d'amplitude 53 dont le signal de sortie est envoyé à un module de stratégie de contrôle 54 qui pilote les trois bras de pont.

Lorsque l'intégrale du signal d'erreur IErr est supérieure à un seuil de commutation positif (figure 3), la sortie du comparateur à hystérésis 53 bascule au niveau logique 1 ce qui fait commuter les bras de pont B1, B2, B3 dans un état 1 à 6 où le vecteur tension VT a la valeur non nulle. De même, lorsque l'intégrale du signal d'erreur IErr est inférieure ou égale au seuil de commutation négatif, la sortie du comparateur à hystérésis 53 bascule à un niveau logique 0 et les bras de pont B1, B2,B3 commutent de manière que le vecteur tension VT soit dans un état de valeur nulle (état 0 ou 7). L'intervalle entre deux commutations dépend donc uniquement de la vitesse avec laquelle évolue la grandeur IErr.

L'amplitude désirée est obtenue grâce à une succession de commandes "état actif' et "roue libre" fournies par le comparateur d'amplitude 53.

L'asservissement de phase a pour but de commuter entre les deux positions du vecteur tension VT (par exemple 1 et 2) où se situe la consigne de phase (figure 8) de sorte que la phase moyenne du vecteur tension vu par la machine 4 corresponde à la consigne.

Le signal de consigne de phase reçu en 62 et un signal correspondant à la phase déduite de la commande des interrupteurs ou à la phase du vecteur tension réel sont appliqués à un élément 55 qui fournit un signal d'erreur correspondant à la différence de ces signaux et représentatif de l'erreur de phase. Le signal d'erreur est appliqué à un élément intégrateur 56 qui fournit une intégrale du signal d'erreur notée IEphase sur les dessins. Ce signal d'erreur intégré est envoyé à un comparateur de phase 57 qui compare la valeur de cette intégration à deux seuils de commutation. Le signal de sortie de ce comparateur 57 est envoyé au module de contrôle de stratégie 54 qui commande les trois bras de pont. La sortie du comparateur 57 varie, si l'on se réfère à la figure 4, de la manière suivante:
- lorsque IEphase augmente et arrive jusqu'au seuil de commutation positif, la sortie de ce comparateur 57 bascule et émet la commande :"incrémenter la phase du vecteur tension instantané de π/3;
- lorsque IEphase diminue et arrive jusqu'au seuil de commutation négatif, la sortie du comparateur 57 bascule et émet la commande :"décrémenter la phase du vecteur tension de π/3;
- si IEphase est compris entre les deux seuils de commutation, la sortie du comparateur 57 reste égale à 0. La consigne de phase reste constante et le vecteur tension occupe une position fixe.

Si la sortie du comparateur 57 est différente de 0, le module Stratégie de contrôle 54 déduit la nouvelle configuration qu'il faut donner aux bras de pont afin de reculer ou d'avancer la phase du vecteur tension instantané de π/3 radians.

Dans le cas d'une référence de champ tournant, le vecteur tension de consigne tourne alors dans l'espace. La consigne de phase est une rampe ou un signal en forme de dents de scie, la pente de la rampe déterminant la fréquence de rotation.

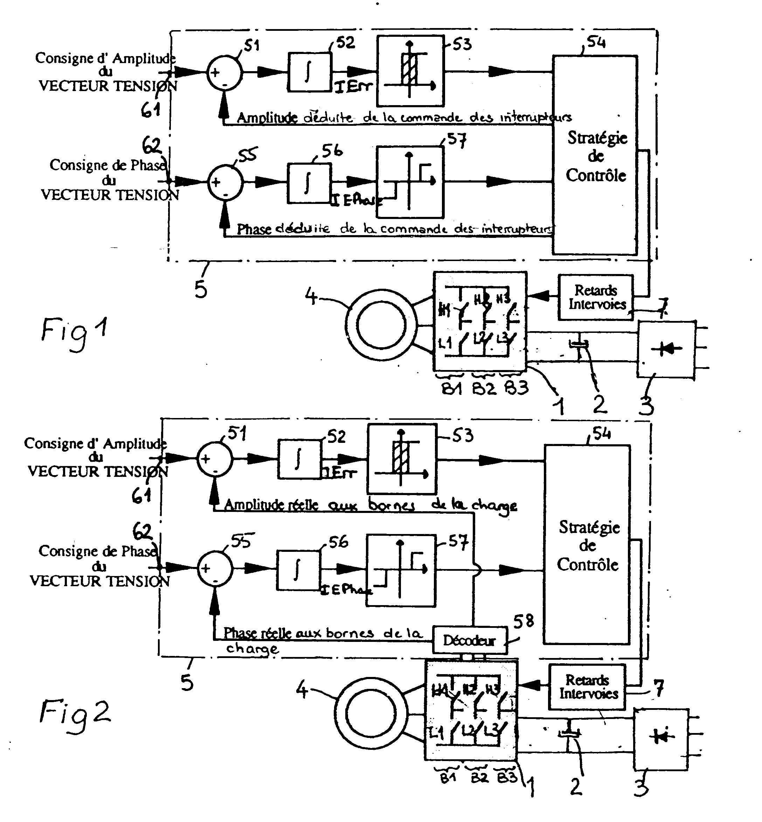

Le mode de réalisation de la figure 1 est une commande dite à boucle ouverte. Les valeurs instantanées de l'amplitude et de la phase sont déduites des états des commandes logiques des bras de pont.

Le mode de réalisation de la figure 2 est à boucle dite fermée. Un décodeur 58 mesure sur les sorties des bras de pont la phase réelle et l'amplitude réelle du vecteur tension et fournit un signal représentatif de la phase réelle à l'élément 55 et un signal représentatif de l'amplitude réelle à l'élément 51.

En variante, on peut déterminer l'orientation du vecteur tension en fonction de la conduction ou non des interrupteurs ou de leurs diodes et déterminer l'amplitude dudit vecteur tension par la mesure ou l'estimation de la tension d'alimentation de l'onduleur.

En variante, on peut cesser d'intégrer l'erreur de phase lorsque l'amplitude réelle est nulle, du fait que durant ces périodes de roue libre, la phase réelle n'est pas définie.

La figure 6 représente une variante de réalisation du bloc comparateur 57 des figures 1 et 2. Grâce à ce type de comparateur, l'intégrale de l'erreur de phase est remise à zéro chaque fois qu'elle atteint le seuil et qu'elle déclenche une commutation.

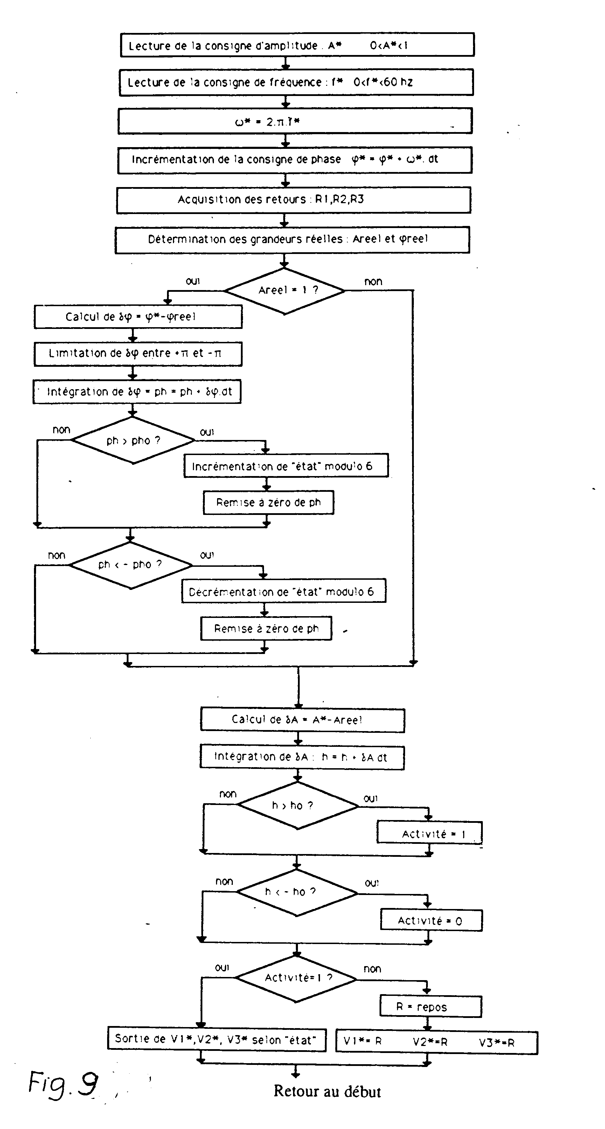

Le circuit de commande 5 peut être réalisé, soit en technologie numérique (microcontrôleur), soit par des circuits linéaires, soit par une solution intermédiaire. En technologie numérique, le circuit de commande 5 peut suivre l'organigramme de la figure 9.

Il est bien entendu que l'on peut sans sortir du cadre de l'invention imaginer des variantes et des perfectionnements de détail et de même envisager l'emploi de moyens équivalents.

## Revendications

**1.** Procédé de commande d'un onduleur polyphasé (1) relié à une source d'alimentation (3) et piloté en modulation de largeur d'impulsions par un circuit de commande (5), comprenant plusieurs bras (B1-B3) dont chacun comporte deux interrupteurs statiques (H1,L1,H2,L2,H3,L3) munis de diodes de récupération, le point milieu entre deux interrupteurs étant relié à une phase d'une charge polyphasée (4), caractérisé par le fait qu'il consiste à réaliser un asservissement de l'amplitude du vecteur tension à une valeur de consigne et un asservissement de phase du dit vecteur tension à une valeur de consigne.

**2.**Procédé selon la revendication 1, caractérisé par le fait qu'il consiste à déterminer un signal d'erreur entre l'amplitude du vecteur tension déduite des ordres de commande des interrupteurs et une valeur de consigne, à intégrer ce signal d'erreur, à comparer la valeur intégrée à des seuils pour faire commuter les bras de pont, à déterminer un signal d'erreur entre la phase dudit vecteur tension et une valeur de consigne, à intégrer ce signal d'erreur, à comparer cette valeur intégrée à des seuils pour faire commuter les bras de pont.

**3-**Procédé selon l'une quelconque des revendications précédentes, caractérisé par le fait qu'il consiste à mesurer l'amplitude réelle et la phase réelle du vecteur tension sur les bras de pont de manière à calculer les signaux d'erreurs.

**4-**Procédé selon l'une quelconque des revendications précédentes, caractérisé par le fait qu'il consiste à déterminer l'orientation du vecteur tension en fonction de la conduction ou non des interrupteurs ou de leurs diodes et à déterminer l'amplitude dudit vecteur tension par la mesure ou l'estimation de la tension d'alimentation de l'onduleur.

**5-**Dispositif pour la mise en oeuvre du procédé selon l'une quelconque des revendications précédentes, caractérisé par le fait qu'il comporte des moyens (51) pour déterminer un signal d'erreur entre l'amplitude réelle ou estimée du vecteur tension et une valeur de consigne, des moyens (52) pour intégrer ce signal d'erreur, des moyens (53) pour comparer la valeur intégrée à des seuils et des moyens (54) pour commander la commutation des bras de pont, des moyens (55) pour déterminer un signal d'erreur entre la phase dudit vecteur tension et une valeur de consigne, des moyens (56) pour intégrer ce signal d'erreur, et des moyens (57,54) pour comparer cette valeur intégrée à des seuils et pour commander la commutation des bras de pont.

**6-**Dispositif selon la revendication 5, caractérisé par le fait qu'il comporte des moyens (54) pour fournir des signaux représentatifs de la phase réelle ou estimée et de l'amplitude réelle ou estimée du vecteur tension, à partir des ordres de commande des interrupteurs, ces signaux étant envoyés respectivement aux moyens (55) pour déterminer le signal d'erreur en phase et aux moyens (51) pour déterminer le signal d'erreur en amplitude.

**7-**Dispositif selon la revendication 5, caractérisé par le fait qu'il comporte des moyens de mesure (58) pour mesurer la phase réelle ou estimée du vecteur tension ,cette mesure étant envoyée aux moyens (55) pour déterminer le signal d'erreur en phase et pour mesurer l'amplitude réelle ou estimée dudit vecteur tension, cette mesure étant envoyée aux moyens (51) pour déterminer le signal d'erreur en amplitude.
